# EUROPEAN PATENT SPECIFICATION

(11) **EP 0 414 771 B1**
(45) Date of publication and mention of the grant of the patent: **06.04.1994**
(21) Application number: 89905820.0
(22) Date of filing: 16.05.1989
(51) Int. Cl.: A01N 37/06, A01N 31/06

(54) **METHOD FOR COMBATTING SPRUCE BARK BEETLES AND COMPOSITION THEREFOR**
VERFAHREN ZUR BEKÄMPFUNG VON FICHTENBORKENKÄFERN UND ZUSAMMENSETZUNG DAFÜR
PROCEDE DE LUTTE CONTRE LES BOSTRYCHES ET COMPOSITION UTILISEE A CET EFFET

(30) Priority: 18.05.1988 SE 8801854
(43) Date of publication of application: 06.03.1991
(73) Proprietor: LÖFQUIST, Jan, S-222 30 Lund (SE); BYERS, John, Lakewood, CO 80226 (US)
(72) Inventor: LÖFQUIST, Jan, S-222 30 Lund (SE); BYERS, John, Lakewood, CO 80226 (US)
(74) Representative: Inger, Lars Ulf Bosson
(86) International application number: SE8900267
(87) International publication number: WO8911221

(56) References cited:
- SE-B- 453 714
- Scand. J. For. Res., vol. 2, 1987; Alf Bakke: "Repression of Ips typographus Infestations in Stored Logs by Semiochemicals", pp. 179-185
- J. Appl.Ent., vol. 106, no. 2, Sept. 1988; M R Paiva et al.: "Reduction in the pheromone attractant response of Orthotomicus erosus (Woll.) and Ips sexdentatus Boern. (Col., Scolytidae)", pp. 198-200
- Chemical Abstracts, vol. 93, 1980, abstract no. 162637k, Khemoretseptsiya Nasekomykh 1979, 4, 121-7 (Russ)

## Description

### Technical field

The present invention relates to a method for inhibiting the eight toothed spruce bark beetle, Ips typographus, as well as the closely related species, Ips acuminatus and Ips sexdentatus.

The object of the present invention is to obtain a possibility to inhibit infestation of the eight toothed spruce bark beetle as well as closely related species.

### Background of the invention

The interest for biological methods for inhibiting pest insects has steadily increased during the last decade. This is particularly due for pheromones, the specie specific signal substances which some animals, and then in particular insects, communicate with, inter alia to find a partner prior to mating. Pheromone based inhibiting methods against pest insects are characterized in that 1) they are highly specie specific. 2) the chemical compounds used are relatively simple, and biologically active in very small amounts to the target organism, often nanogram amounts, and 3) the insects have great difficulty in developing resistance against these natural signal compounds.

The high species specificity of the pheromones means that pheromone based inhibiting agents are directed almost only against individuals of one single species. Sometimes, furthermore, against closely related species. The chemical composition of the pheromones is as a rule of such a type that they will quite easily decompose by UV-light and micro organisms after an application. Then they are decomposed to compounds which are completely harmless to other organisms. This is natural as the pheromones as behaviour signal shall be short living. They are thus not accumulated in higher organisms in a nutritional chain. The development of resistance in the insects against specie specific pheromones is extremely improbable. In spite of a considerable use of pheromones in the inhibition of e.g. a cotton fly in California for a whole decade, no resistance has developed. No change whatsoever in the composition of the pheromone has been demonstrated.

For the reason given above pheromone based inhibiting methods against pest insects are particularly harmless to the environment. Furthermore, they have proved to be extremely efficient.

Inhibition of forest damaging insects is an area where pheromone based inhibiting methods already are of great importance as great economical values are at stake hereby. These is particularly due for bark beetles which every years cause great losses both in form of killed trees, growth losses and numerous damages of e.g. blueing fungus.

The eight toothed spruce bark beetle, Ips typographus is one of the most serious forest pest insects in Europe. It can under certain circumstances attack and kill standing healthy spruces to a great extent.

The species normally mates in dying trees, e.g. windfallen trees. The larvae live of the nutritionally rich bast layer (phloem) underneath the outer bark. A male that bores into that excretes a pheromone consisting of 2-methyl-3-buten-2-ol (MB) and cis-verbenol (CV). The pheromone attracts females to the tree but also other males. The pheromone is well known and MB and CV are utilized since long on a commercial scale as an attration agent in traps for catching the eight toothed spruce bark beetle.

The amount of MB and CV excreted by an inbored male increases during the first days and reaches a maximum when he has gnawed out a mating chamber and ready to allow one or more females therein. The amount of pheromone attraction agent then deceases in order to be down at a very low level about one week after the male has started his boring into the bark. This means that when many spruce bark beetles attacks a tree then the attracting pheromone signal from the tree will increase rapidly. More bark beetles will be attracted and the number increases exponentially. Such a massive attack on a certain tree is characteristic for the reproduction strategy of the bark beetles. Certainly, it is, however, devastating if too many bark beetles are attracted to the same tree. The competition for the limited feed for the larvae will then become so great that many of them die. Thus the bark beetles excrete a stop signal for further attraction to that tree. The stop signal is, however, not completely investigated. One very important component of this is, however, verbenone, which is mainly produced by fungi and other micro organisms which start to grow in the path system gnawed by the beetles. The male of the spruce bark beetle will himself excrete two substances, ipsenol, and ipsdienol, in amounts that increase during the later phases simultaneously with the decrease of the attraction agents. Ipsenol and ipsdienol seem however, to have a restricted effect as a stop signal.

Usually, the eight toothed spruce bark beetle lives in low population densities. In this endemic phase it mates in wind fallen, broken or otherwise damaged trees, which show a low vitality. Severe autumn storms with much of wind fallen spruce forest offers, however, an excess of mating trees to the spruce bark beetle. The population thereof increases rapidly, and in particular if two such years follow on each other the spruce bark beetle can reach an epidemic phase in which the population density is so high that it, with success, can attack and kill also healthy spruces. Such outbursts can be given a great extent, as now lately during the 1970ties when primarily in Värmland, Sweden and parts of Norway, spruce forests for 100s million crowns were killed. Cut, unbarked spruce, which is left in the forest during the swarming of the spruce bark beetle in May to June is, from the insects point of view, a perfect mating place. In order to prevent the building up of epidemic population densities then piles of cut spruce have be protected in some way. Today this is made in Sweden through legislation requiring cut spruce to be transported out of the forest before August 1, i.e., prior to the hatching of the new generation of spruce bark beetles.

Besides the eight toothed spruce bark beetle, Ips typographus, the spruce is being attacked by the six toothed spruce bark beetle, Pityogenes chalcographus. The two species show a very similar way of living. The attraction agent of the male of the six toothed spruce bark beetle consists of 2-ethyl-1,6-dioxaspironane having the trivial name chalcogran in a combination with the methyl ester of 2,4-decadienic acid (MD). Both substances are commercially utilized today as attraction agents. It is hereby referred to United States Patent US-A-4,205,084 when chalcograne is concerned, and to Swedish Patent Application No. SE-A-8600448-8 when methyl decadienoate is concerned. Of chalcograne the 2S,5R-enantiomer is preferred, and of the methyl ester the 2E,4Z isomer is preferred.

### Description of the present invention

It has now surprisingly been shown possible to be able to prevent attraction to spruce by utilizing an attracting pheromone component of a competing species, optionally in combination with an inhibiting pheromone component of the eight toothed spruce bark beetle. By utilizing only one of two synergistic attraction agents of the competing specie attraction of this latter is avoided.

The eight toothed and six toothed spruce bark beetles compete which one another for the spruce as a mating place. It is, as mentioned above, known through previous work, that verbenone is a shop signal of the eight toothed spruce bark beetle, whereby verbenone prevents attraction of further spruce bark beetles to its attracting agent. It has now turned out that methyl 2,4-decadienoate of attraction system of the six toothed spruce bark beetle also will function as a stop signal to the eight toothed spruce bark beetle. It has further turned out that a combination of verbenone and methyl 2,4-decadienoate is superior each of the two substances as a stop signal to the eight toothed spruce bark beetle.

The present invention will now be described more in detail with reference to the following examples, however, without being restricted thereto.

The inhibiting effect of either of methyl 2,4-decadienoate and verbenone as well as a combination of methyl 2,4-decadienoate and verbenone on the eight toothed spruce bark beetle against its attraction agent consisting of MB + CV was investigated in a laboratory test. In this test a laminar air flow with a speed of 2 m/s was created over a surface covered by filter paper. A capillary containing the substances was placed upwind. The bark beetles were released 10 at a time 14 cm downwind from the capillary. Those walking and orienting within a circle having a radius of 1.5 cm out from the capillary are regarded to have responded positively on the attraction agent. The method is described more in detail by Byers, J.A. and Wood, D, J. Chem. Ecol. 7, 9-18, (1981).

The result of a test series carried out in accordance with the above described technique is shown in the attached figure. It is evident that the attraction of males of the species Ips typographus to MB + CV is inhibited by MD or verbenone or both in combination, whereby the combination gives a superior effect already at a release rate of 2.2 x 10⁻⁹ g/min, but preferably at a release rate of 2.2 x 10⁻⁸ g/min, or more.

Due to the way of living MD alone or in combination with verbenone the same effect against Ips acumimatus and Ips sexdentatus, which both are bark borer beetles closely related to Ips typographus.

At the use of the combination above to this aim the combination of verbenone and methyl 2,4-decadienoate verbenone is applied in an absorbent, such as silica, zeolites, or porous polymers, such as of polyethylene, polycarbamide, or dextrose derivatives, or be dispersed in an emulsion of a cellulose derivative, such as CMC, hydroxymethyl cellulose, other starch glues or gum forming polysaccharides, so that the compound is released with an even amount for a long time. The absorbent is sprayed over the store of wood in the forest. As the wood does not become attacked the transport out of the forest can be spread during a longer time period and can be made during the autumn. In the same way, summer cutting can take place which means a more rational handling within forestry.

The present invention can be used on standing spruce, but also, of course, on, and preferably on, cut spruce wood as well as fallen trees.

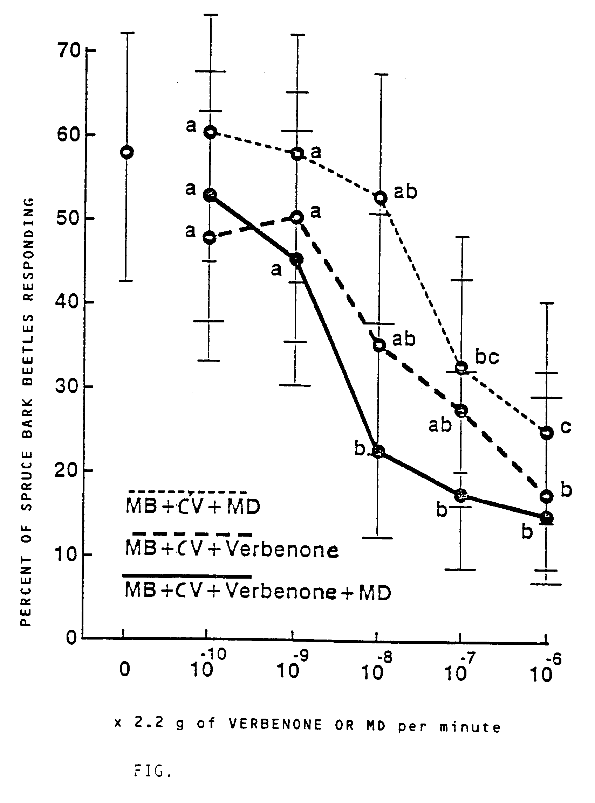

- FIG. 1: Inhibition of the attraction of Ips typographus in a laboratory test with increasing amounts of either of (-)-verbenone and 2E,4Z-methyl decadienoate as well as the combination of this two, together with a constantly released amount of the attracting pheromone components cis-verbenol and methylbutenol, the latter two each being released in an amount of 2.2 x 10⁻⁷ g/min. The result of the response indicated with the same letter are not significantly differing from each other in a test series.

## Claims

1. Method for inhibiting the eight toothed spruce bark beetle Ips typographus, and optionally, its closely related species Ips acuminatus and Ips sexdentatus by preventing aggregation and/or infestation of spruce, **characterized** in that one applies an inhibitory active amount of the methyl ester of 2,4-decadienic acid, optionally in combination with verbenone on spruce.

2. Method according to claim 1, **characterized** in that one adds so much of methyl 2,4-decadienoate that one obtains a release of at least about 2.5 x 10⁻⁷ g of methyl 2,4-decadienoate per minute.

3. Method according to claim 1, **characterized** in that one adds a combination of verbenone and methyl 2,4-decadienoate that one obtains a release of at least 2.5 x 10⁻⁹ g of verbenone, and a release of methyl 2,4-decadienoate of 2.5 x 10⁻⁹ g per minute.

## Patentansprüche

1. Verfahren zur Hemmung des achtzahnigen Fichtenborkenkäfers Ips typographus und gegebenenfalls seiner nahe verwandten Arten Ips acuminatus und Ips sexdentatus durch Verhinderung einer Häufung und/oder eines Fichtenbefalls, **dadurch gekennzeichnet**, daß man eine für die Hemmung wirksame Menge des Methylesters von 2,4-Decadiensäure, gegebenenfalls in Kombination mit Verbenon auf Fichten aufbringt.

2. Verfahren nach Anspruch 1, **dadurch gekennzeichnet,** daß man so viel 2,4-Decadiensäuremethylester zugibt, daß man eine Abgabe von wenigstens etwa 2,5 x 10⁻⁷ g 2,4-Decadiensäuremethylester je Minute erhält.

3. Verfahren nach Anspruch 1, **dadurch gekennzeichnet**, daß man eine Kombination von Verbenon und 2,4-Dicadiensäuremethylester zugibt, so daß man eine Abgabe von wenigstens 2,5 x 10⁻⁹ g Verbenon und eine Abgabe von 2,5 x 10⁻⁹ g 2,4-Decadiensäuremethylester je Minute bekommt.

## Revendications

1. Procédé pour inhiber un bostryche typographe Ips typographus, et éventuellement ses espèces étroitement apparentées Ips acuminatus et Ips sexdentatus en empêchant l'agrégation et/ou l'infestation de l'épicéa, caractérisé en ce qu'on applique une quantité inhibitrice active de l'ester méthylique d'acide 2,4-décadiénique, éventuellement en combinaison avec de la verbénone sur l'épicéa.

2. Procédé suivant la revendication 1, caractérisé en ce qu'on ajoute une quantité telle de 2,4-décadiénoate de méthyle qu'on obtient une libération d'au moins environ 2,5 x 10⁻⁷ g de 2,4-décadiénoate de méthyle par minute.

3. Procédé suivant la revendication 1, caractérisé en ce qu'on ajoute une combinaison de verbénone et de 2,4-décadiénoate de méthyle telle qu'on obtient une libération d'au moins 2,5 x 10⁻⁹ g de verbénone et une libération de 2,4-décadiénoate de méthyle de 2,5 x 10⁻⁹ g par minute.
